**Europäisches Patentamt**

**European Patent Office**

**Office européen des brevets**

(11) Veröffentlichungsnummer : **0 098 919 B1**

(12) **EUROPÄISCHE PATENTSCHRIFT**

(45) Veröffentlichungstag der Patentschrift :
07.05.86

(51) Int. Cl.⁴ : **B 01 D 59/18**

(21) Anmeldenummer : 83102626.5

(22) Anmeldetag : 17.03.83

(54) **Verfahren zum Herstellen von aus Trennkörpern mit Abschlussplatten bestehenden Trenndüsenelementen zur Trennung gas- oder dampfförmiger Gemische.**

(30) Priorität : 11.06.82 DE 3221981

(43) Veröffentlichungstag der Anmeldung :
25.01.84 Patentblatt 84/04

(45) Bekanntmachung des Hinweises auf die Patenterteilung : 07.05.86 Patentblatt 86/19

(84) Benannte Vertragsstaaten :
**FR GB IT NL SE**

(56) Entgegenhaltungen :
EP-A- 0 024 515
DE-A- 2 536 718
DE-A- 3 006 527
DE-A- 3 039 110
DE-B- 2 922 642

(73) Patentinhaber : **Kernforschungszentrum Karlsruhe GmbH**
**Weberstrasse 5**
**D-7500 Karlsruhe 1 (DE)**

(72) Erfinder : **Becker, Erwin, Prof. Dr.**
**Strählerweg 18**
**D-7500 Karlsruhe-Durlach (DE)**
Erfinder : **Ehrfeld, Wolfgang, Dr.**
**Reutestrasse 27**
**D-7500 Karlsruhe 41 (DE)**
Erfinder : **Münchmeyer, Dietrich**
**Haydnstrasse 17**
**D-7504 Weingarten (DE)**
Erfinder : **Heuberger, Anton, Dr.**
**Meggendorfer Strasse 61**
**D-8000 München 50 (DE)**
Erfinder : **Betz, Hans, Dr.**
**Hoeppner Strasse 19**
**1 Berlin 42 (DE)**

## Beschreibung

Die Erfindung betrifft ein Verfahren zum Herstellen von aus Trennkörpern mit Abschlußplatten bestehenden Trenndüsenelementen zur Trennung gas- oder dampfförmiger Gemische nach dem Oberbegriff des Anspruchs 1. Unter gas- oder dampfförmigen Gemischen sind insbesondere Isotopengemische wie $^{235}UF_6$ und $^{238}UF_6$ zu verstehen, die wegen ihrer chemischen Eigenschaften besondere Anforderungen an das Material der Trenndüsenelemente stellen.

Beim Trenndüsenverfahren ist der zu minimalem spezifischem Energieverbrauch führende Gasdruck zu den charakteristischen Abmessungen der Trennstruktur umgekehrt proportional (Chemie Ing. Technik 39 (1967) S. 4). Da die spezifischen Kosten der für die Ausführung des Verfahrens erforderlichen Kompressoren, Rohrleitungen, Ventile und Steuereinrichtungen mit zunehmenden Gasdruck erheblich abnehmen, müssen die charakteristischen Abmessungen der Trennstruktur so klein wie möglich gewählt werden. Den heute verwendeten bzw. angestrebten Einlaßdrücken zwischen 0,5 und 1,5 bar entsprechen dabei engste Weiten des Abschälerschlitzes der Trennstruktur zwischen 10 und 3 µm.

Zur Herstellung von Trenndüsenelementen mit besonders kleinen charakteristischen Abmessungen ist es bekannt, diese aus Trennkörpern und Abschlußplatten zusammenzusetzen. Die Trennkörper werden dabei von Trennstrukturen durchsetzt, die aus Trennräumen und Gasführungsleitungen bestehen, während die Abschlußplatten Kanäle für die Zu- und Abfuhr der Gasströme enthalten.

An den Stellen, an denen die Trennstrukturen durch die Abdeckplatten begrenzt werden, ergibt sich naturgemäß eine Abbremsung der für die Trennung maßgeblichen Gasströmung, woraus ein Verlust an Trennleistung resultiert. Dieser Verlust ist umso größer, je kleiner das Verhältnis von Dicke des Trennkörpers zu engster Weite des Abschälerschlitzes (« Trennkörper-Aspektverhältnis ») ist. Um die Endverluste ausreichend klein zu halten, müssen Trennkörper-Aspektverhältnisse zwischen 100 und 200 angestrebt werden. Bei einer engsten Weite des Abschälerschlitzes von 3 µm sollten die Trennkörper also eine Dicke zwischen 300 und 600 µm haben.

Trennkörper mit Aspektverhältnissen in dieser Größenordnung und engsten Weiten der Abschälerschlitze von einigen µm lassen sich im Prinzip dadurch herstellen, daß aus einem durch energiereiche Strahlung in seinen Eigenschaften veränderbaren platten- oder schichtförmigen Material (Formmaterial) durch partielles Bestrahlen und partielles Entfernen von Formmaterial unter Ausnutzung der durch die Bestrahlung erzeugten unterschiedlichen Materialeigenschaften die Trennstrukturen enthaltende Formen hergestellt werden, die mit einem mit dem zu trennenden Gemisch verträglichen Material (Strukturmaterial) aufgefüllt werden, worauf das Material der Formen entfernt wird.

Bei der praktischen Anwendung dieses Grundprinzips steht man jedoch vor dem Problem, daß energiereiche Strahlung, die eine Formmaterial-Schicht von der angestrebten Dicke des Trennkörpers (300-600 µm, siehe oben) durchdringt, bei den heute bekannten Materialien Sekundärprozesse auslöst, die das räumliche Auflösungsvermögen so stark verschlechtern, daß die geforderten Toleranzen für die engen Abschälerschlitze nich mit Sicherheit erreicht werden.

In der DE-PS-29 22 642 wurde daher davon ausgegangen, daß der Trennkörper aus zahlreichen gestapelten Platten zusammengesetzt ist, die, jede für sich, ein wesentlich kleineres Aspektverhältnis haben können. Abgesehen davon, daß die Genauigkeitsforderungen beim gegenseitigen Ausrichten der zu stapelnden Platten und ihre gegenseitige Abdichtung technische Probleme darstellen, muß bei dieser Methode das die Trennstrukturen bildende Material räumlich zusammenhängen, was zu technischen und wirtschaftlichen Nachteilen führen kann.

In der DE-PS-29 33 570 wurde daher vorgeschlagen, daß einzelne Schichten des Formmaterials schrittweise bis zur gewünschten Gesamtdicke des Trennkörpers aufeinandergebracht werden, wobei jede Schicht nach partiellem Bestrahlen und partiellem Entfernen von Formmaterial mit Strukturmaterial aufgefüllt wird. Dadurch entfallen die Dichtungsprobleme und es wird möglich, auch Trennstrukturen zu verwirklichen, bei denen das diese Strukturen bildende Material räumlich nicht zusammenhängt (siehe DE-PS-29 33 570, Figur 7 und 8).

Das schrittweise Aufbringen des Formmaterials und das schrittweise Auffüllen mit Strukturmaterial ist verhältnismäßig aufwendig.

Der Erfindung liegt die Aufgabe zugrunde, einen Prozeß der gattungsgemäßen Art aufzuzeigen, bei dem ohne Verlust an räumlichem Auflösungsvermögen zur Herstellung der Trennkörper jeweils nur eine Schicht des Formmaterials verwendet wird. Für die Lösung dieser Aufgabe werden die im Kennzeichen der Patentansprüche enthaltenen Maßnahmen vorgeschlagen.

Mit der erfindungsgemäßen Methode gelingt es in überraschender Weise, die Trennstrukturen mit der geforderten Genauigkeit in Materialschichten einzuarbeiten, deren Dicke ein Vielfaches der Eindringtiefe der angewendeten Strahlung beträgt, wodurch es ermöglicht wird, die Trennkörper mit jeweils nur einer Schicht des Formmaterials herzustellen.

Bei dem Verfahren nach Anspruch 1 hat sich als energiereiche Strahlung besonders die von Elektronensynchrotons bzw. Elektronenspeicherringen produzierte Röntgenstrahlung bewährt, während bei dem Verfahren nach Anspruch 2 zweckmäßig Korpuskularstrahlen verwendet werden.

Bei Verwendung von Röntgenstrahlung wird die Beschränkung der Strahlung auf bestimmte Bereiche der Formmaterial-Schichten durch Masken erreicht, die zweckmäßig auf den der Strahlenquelle zugewandten Oberflächen der Formmaterial-Schichten fest angebracht sind. Durch das feste Anbringen entfällt beim mehrfachen abwechselnden Bestrahlen und partiellen Entfernen des Formmaterials die Notwendigkeit einer mehrfachen Justierung der Maske gegenüber dem bereits strukturierten Formmaterial.

Bei Verwendung von Korpuskularstrahlen kann die Beschränkung der Strahlung außer durch eine Maske auch durch Verwendung eines Strahls mit sehr kleinem Querschnitt erreicht werden, der mit elektrischen und/oder magnetischen Feldern über die zu bestrahlenden Bereiche der Formmaterial-Schichten geführt wird.

Bei einer speziellen Ausführungsform werden die Formmaterial-Schichten vor dem partiellen Bestrahlen und partiellen Entfernen mit jeweils einer Abschlußplatte verbunden. Durch galvanisches Auffüllen des Negativs der Trennstruktur unter Verwendung der Abschlußplatten als Elektroden kann dabei auf einfache Weise eine feste Verbindung zwischen den Trennstrukturen und den Abschlußplatten erreicht werden.

Die Kombinationen aus Trennkörper und Abschlußplatte können mit jeweils einer zweiten Abschlußplatte zu Trenndüsenelementen vervollständigt werden. Es ist aber auch möglich, jeweils zwei Kombinationen von Trennkörper und Abschlußplatte zu erzeugen, wobei die Trennkörper zueinander spiegelsymmetrisch auf den Abschlußplatten aufgebracht werden und, fluchtend gegeneinander ausgerichtet, zu Trenndüsenelementen vereinigt werden. Dadurch wird das Trennkörperaspektverhältnis verdoppelt, bzw. die Dicke der für ein bestimmtes Trennkörperaspektverhältnis in einem Zug zu bearbeitenden Materialschichten halbiert.

Die Vorteile des Verfahrens der Erfindung kommen besonders zum Tragen, wenn die Trennkörper, entsprechend DE-PS-29 33 570, neben den Trennstrukturen Gassammelräume enthalten. Um den Strömungswiderstand der Gassammelräume und den dadurch bedingten zusätzlichen Energieverbrauch des Trenndüsenverfahrens klein zu halten, müssen die Gassammelräume einen genügend großen Querschnitt besitzen. In der Praxis führt das dazu, daß der auf die Gassammelräume entfallende Anteil der nach dem Verfahren der Erfindung zu bearbeitenden Formmaterial-Schichten erheblich größer sein kann, als der auf die Trennstrukturen entfallende. Es wird daher vorgeschlagen, die Querschnitte der Gassammelräume durch Vertiefungen in mindestens einer der beiden Abschlußplatten zu vergrößern. Es wurde gefunden, daß sich dadurch der Gesamtaufwand für die Herstellung der aus Trennkörpern mit Abschlußplatten bestehenden Trenndüsenelemente ohne Vergrößerung des Energieverbrauchs erheblich vermindern läßt.

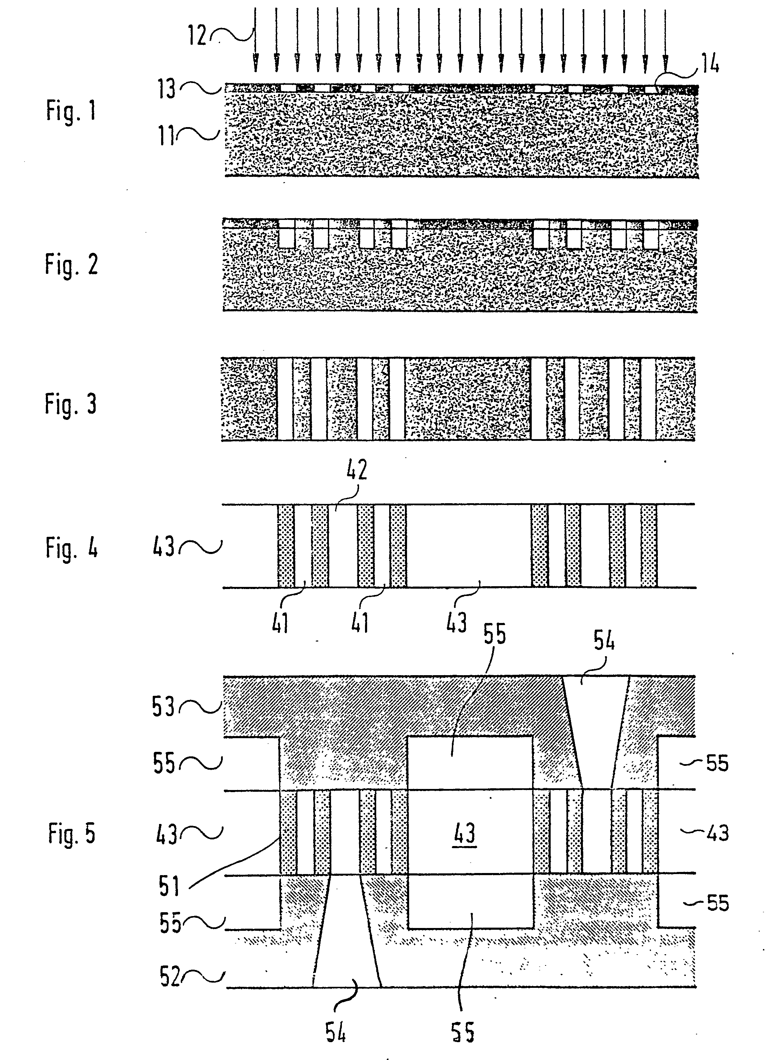

Das Verfahren der Erfindung wird im folgenden anhand der schematischen Figuren 1 bis 5 und eines Ausführungsbeispiels näher erläutert.

In Figur 1 stellt 11 die Formmaterial-Schicht dar, deren Dicke wesentlich größer als die Eindringtiefe der Strahlung 12 ist. 13 ist eine Maske, die fest auf der der Strahlenquelle zugewandten Oberfläche der Formmaterial-Schicht angebracht ist. Bei Verwendung eines sogenannten Positiv-Resists als Formmaterial enthält die Maske an den für das partielle Entfernen des Formmaterials vorgesehenen Stellen Öffnungen 14 für den Durchtritt der Strahlung.

Figur 2 zeigt für das Verfahren nach Anspruch 1 den Zustand nach einmaligem partiellem Bestrahlen und einmaligem partiellem Entfernen von bestrahltem Formmaterial. Beim Verfahren nach Anspruch 2 wird dieser Zustand durch gleichzeitiges partielles Bestrahlen und partielles Entfernen des Formmaterials nach einem Bruchteil der für die vollständige Durchdringung der Formmaterial-Schicht erforderlichen Bearbeitungszeit erreicht.

In Figur 3 ist die fertige Form dargestellt, bei der das Negativ der Trennstruktur die Formmaterial-Schicht vollständig durchsetzt und die Maske entfernt worden ist.

Figur 4 zeigt den Trennkörper, der durch Auffüllen der Form mit Strukturmaterial und anschließendes Entfernen des Formmaterials hergestellt wurde. 41 sind Trennräume, 42 sind Gasführungsleitungen, während 43 Gassammelräume darstellen.

In Figur 5 ist das aus dem Trennkörper 51 entsprechend Figur 4 und den Abdeckplatten 52 und 53 bestehende Trenndüsenelement dargestellt. Die Abdeckplatten enthalten, neben den üblichen Kanälen 54 für die Zu- und Abfuhr der Gasströme, die erfindungsgemäß angebrachten Vertiefungen 55 zur Vergrößerung der Querschnitte der Gassammelräume 43.

Ausführungsbeispiel :

Entsprechend der deutschen Auslegungsschrift DE-B-30 07 385 wurde eine 300 μm dicke Folie heiß aus PMMA-Granulat (Du Pont Typ 2010) gewalzt. Auf diese Formmaterial-Schicht wurde als Maske eine 10 μm dicke, nach dem Formätzverfahren strukturierte Folie aus Kupfer-Beryllium (vgl. z. B. Naturwissenschaften 63 (1976) 409) mit Zyanacrylat geklebt. Diese Probe wurde mit der Röntgenstrahlung eines Elektronensynchrotons mit einer Dosis von 500 $J/cm^3$ bestrahlt, wobei die charakteristische Wellenlänge der Röntgenstrahlung 0,7 nm betrug. Die Eindringtiefe der Strahlung lag bei etwa 30 μm, war also erheblich kleiner als die Dicke der Formmaterial-Schicht (300 μm, siehe oben). Anschließend wurden die bestrahlten Bereiche des Formmaterials unter Verwendung eines Spezialentwicklers entsprechend der DE-A-30 39 110 bei einer Arbeitstemperatur von 35 °C durch Tauchentwicklung entfernt. Nach dem Spülen und Trocknen wurden Bestrahlung und Entwicklung abwechselnd wiederholt, wodurch in insgesamt zehn Schritten die Trenndüsenstruktur ohne Verlust an räumlichem Auflösungsvermögen in die volle Dicke des Formmaterials eingebracht werden konnte.

**Patentansprüche**

1. Verfahren zum Herstellen von aus Trennkörpern mit Abschlußplatten bestehenden Trenndüsenelementen zur Trennung gas- oder dampfförmiger Gemische, bei dem aus durch energiereiche Strahlung in ihren Eigenschaften veränderbaren Formmaterial-Schichten durch partielles Bestrahlen und partielles Entfernen von Formmaterial unter Ausnutzung der durch die Bestrahlung erzeugten unterschiedlichen Materialeigenschaften die Negative der Trennstrukturen enthaltende Formen hergestellt werden, die mit einem mit dem zu trennenden Gemisch verträglichen Strukturmaterial aufgefüllt werden, wonach die Formen entfernt werden, dadurch gekennzeichnet, daß die Dicke der Formmaterial-Schichten etwa gleich der vorgesehenen Dicke der Trennkörper und die Eindringtiefe der Strahlung kleiner als die Dicke der Formmaterial-Schichten gewählt werden, und das partielle Bestrahlen und das partielle Entfernen von Formmaterial abwechselnd solange durchgeführt wird, bis die Negative der Trennstrukturen die Formmaterial-Schichten vollständig durchsetzen.

2. Verfahren zum Herstellen von aus Trennkörpern mit Abschlußplatten bestehenden Trenndüsenelementen zur Trennung gas- oder dampfförmiger Gemische, bei dem aus durch energiereiche Strahlung in ihren Eigenschaften veränderbaren Formmaterial-Schichten durch partielles Bestrahlen und partielles Entfernen von Formmaterial unter Ausnutzung der durch die Bestrahlung erzeugten unterschiedlichen Materialeigenschaften die Negative der Trennstrukturen enthaltende Formen hergestellt werden, die mit einem mit dem zu trennenden Gemisch verträglichen Strukturmaterial aufgefüllt werden, wonach die Formen entfernt werden, dadurch gekennzeichnet, daß die Dicke der Formmaterial-Schichten etwa gleich der vorgesehenen Dicke der Trennkörper und die Eindringtiefe der Strahlung kleiner als die Dicke der Formmaterial-Schichten gewählt werden und das partielle Bestrahlen und das partielle Entfernen von Formmaterial gleichzeitig solange durchgeführt wird, bis die Negative der Trennstrukturen die Formmaterial-Schichten vollständig durchsetzen.

3. Verfahren nach Anspruch 1 oder 2, dadurch gekennzeichnet, daß beim partiellen Bestrahlen Masken benutzt werden, die fest auf den der Strahlenquelle zugewandten Oberflächen der Formmaterial-Schichten angebracht sind.

4. Verfahren nach Anspruch 1, 2 oder 3, dadurch gekennzeichnet, daß die Formmaterial-Schichten vor dem partiellen Bestrahlen und partiellen Entfernen mit jeweils einer Abschlußplatte verbunden werden, und daß das Auffüllen der Formen galvanisch unter Verwendung der Abschlußplatten als Elektroden erfolgt.

5. Verfahren nach Anspruch 4, dadurch gekennzeichnet, daß jeweils zwei Kombinationen von Trennkörper und Abschlußplatte erzeugt werden, wobei die Trennkörper zueinander spiegelsymmetrisch auf den Abschlußplatten aufgebracht werden und, fluchtend gegeneinander ausgerichtet, zu Trenndüsenelementen zusammengefügt werden.

6. Verfahren nach Anspruch 1, 2, 3, 4 oder 5, bei dem die Trennkörper außer den Trennstrukturen Gassammelräume enthalten, dadurch gekennzeichnet, daß die Querschnitte der Gassammelräume durch Vertiefungen in mindestens einer der beiden Abschlußplatten vergrößert werden.

**Claims**

1. Method for producing separating nozzle elements composed of separating bodies with cover plates, the separating nozzle elements being used for the separation of gaseous or vaporous mixtures, wherein from mold material layers, variable in their properties through high energy radiation, by partial irradiation and partial removal of mold material using the different material properties generated by irradiation, the negatives of the separating structures containing molds are produced which are filled with a structure material compatible with the mixture to be separated whereupon the molds are removed, with the thickness of the mold material layers roughly equal to the envisaged thickness of the separating bodies and the depth of penetration of the radiation chosen to be smaller than the thickness of the mold material layers and with partial irradiation and partial removal of mold material being alternately continued until the negatives of the separating structures have completely penetrated into the mold material layers.

2. Method for producing separating nozzle elements composed of separating bodies with cover plates, the separating nozzle elements being used for the separation of gaseous or vaporous mixtures, wherein from mold material layers, variable in their properties through high energy radiation, by partial irradiation and partial removal of mold material using the different material properties generated by irradiation, the negatives of the separating structures containing molds are produced which are filled with a structure material compatible with the mixture to be separated whereupon the molds are removed with the thickness of the mold material layers roughly equal to the envisaged thickness of the separating bodies and the depth of penetration of radiation chosen to be smaller than the thickness of the mold material layers and with partial irradiation and partial removal of mold material being continued simultaneously until the negatives of the separating structures have completely penetrated into the mold material layers.

3. Method as defined in claim 1 or 2 wherein masks are used during partial irradiation which are firmly attached to the surfaces of the mold material layers facing the radiation source.

4. Method as defined in claim 1, 2 or 3 wherein the mold material layers prior to partial irradiation and partial removal are connected each with a cover plate and wherein filling of the molds is effected electrochemically using cover plates as electrodes.

5. Method as defined in claim 4 wherein two combinations each of separating body and cover plate are produced with the separating bodies provided mirror symmetrically with respect to each other on the cover plates and, aligned so as to be flush against each other, combined into separating nozzle elements.

6. Method as defined in claim 1, 2, 3, 4 or 5 wherein the separating bodies, besides the separating structures, contain gas collecting chambers with the cross sections of the gas collecting chambers increased by recesses in at least one of the two cover plates.

## Revendications

1. Procédé pour la fabrication d'éléments séparateurs à tuyères constitués de corps séparateurs comportant des plaques d'obturation, destinés à la séparation de mélange gazeux ou sous forme de vapeurs, dans lequel on fabrique, à partir de couches de matériau moulable dont les propriétés peuvent être modifiées par irradiation partielle et élimination partielle du matériau moulable, en tirant parti des différences des propriétés du matériau produites par l'irradiation, des moules contenant les négatifs des structures de séparation qui sont garnis de matière pour la structure, compatible avec le mélange que l'on doit séparer, après quoi on élimine les moules, procédé caractérisé en ce que l'épaisseur des couches du matériau moulable est à peu près égale à l'épaisseur que l'on prévoit pour le corps séparateur, et que la profondeur de pénétration de l'irradiation est choisie plus petite que l'épaisseur des couches de matériau moulable, et que l'irradiation partielle et l'élimination partielle du matériau moulable sont poursuivies alternativement jusqu'à ce que les négatifs des structures séparatrices traversent complètement les couches de matériau moulable.

2. Procédé pour la fabrication d'éléments séparateurs à tuyères comportant des plaques d'obturation, pour la séparation de mélanges gazeux ou sous forme de vapeurs, dans lequel on fabrique, à partir de couches de matériau moulable dont les propriétés peuvent être modifiées par irradiation partielle et élimination partielle du matériau moulable, en tirant parti des différences des propriétés du matériau produites par l'irradiation, les moules contenant les négatifs des structures de séparation qui sont garnis de matière pour la structure, compatible avec le mélange que l'on doit séparer, après quoi on élimine les moules, procédé caractérisé en ce que l'épaisseur des couches du matériau moulable est à peu près égale à l'épaisseur que l'on prévoit pour le corps séparateur, et que la profondeur de pénétration de l'irradiation est choisie plus petite que l'épaisseur des couches de matériau moulable, et que l'irradiation partielle et l'élimination partielle du matériau moulable sont poursuivies alternativement jusqu'à ce que les négatifs des structures séparatrices traversent complètement les couches de matériau moulable.

3. Procédé suivant l'une des revendications 1 et 2, caractérisé en ce que, en cas d'irradiation partielle, on utilise des masques qui sont posés solidement sur les surfaces des couches de matériau moulable qui sont tournées vers la source de rayonnement.

4. Procédé suivant l'une quelconque des revendications 1, 2 ou 3, caractérisé en ce que les couches de matériau moulable sont reliées, avant l'irradiation partielle et l'élimination partielle, chaque fois, avec une plaque d'obturation, et que le garnissage des moules s'opère par galvanoplastie, en utilisant les plaques d'obturation comme électrodes.

5. Procédé suivant la revendication 4, caractérisé en ce que l'on produit chaque fois deux combinaisons de corps séparateurs et de plaque d'obturation, les corps séparateurs étant posés en symétrie inverse l'un par rapport à l'autre sur les plaques d'obturation et étant assemblés en éléments séparateurs à tuyères, dirigés pour s'aligner l'un à l'autre.

6. Procédé suivant l'une quelconque des revendications 1, 2, 3, 4 ou 5, dans lequel les corps séparateurs contiennent en dehors des structures séparatrices, des chambres collectrices des gaz, caractérisé en ce que les sections transversales des chambres collectrices des gaz sont agrandies par des cavités pratiquées dans au moins une des deux plaques d'obturation.

**0 098 919**

Fig. 1

Fig. 2

Fig. 3

Fig. 4

Fig. 5